(19) Europäisches Patentamt
European Patent Office
Office européen des brevets

(11) **EP 2 254 257 A1**

(12) **EUROPEAN PATENT APPLICATION**

(43) Date of publication:
**24.11.2010 Bulletin 2010/47**

(51) Int Cl.:
*H04B 1/707* (2006.01)    *H04B 7/02* (2006.01)
*H04W 36/18* (2009.01)

(21) Application number: **09160631.9**

(22) Date of filing: **19.05.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**

(71) Applicant: **Telefonaktiebolaget LM Ericsson (publ)**
**164 83 Stockholm (SE)**

(72) Inventors:
• **Golshenas, Ario**
  **SE-217 64, MALMÖ (SE)**

• **Hultgren, Simon**
  **SE-214 32, MALMÖ (SE)**

(74) Representative: **Andersson, Björn E.**
**Ström & Gulliksson AB**
**P.O. Box 793**
**220 07 Lund (SE)**

(54) **Method and processing unit for processing signals with macro diversity**

(57)    Methods of processing signals, representing the same data, each of which is received over a corresponding one of a plurality of communication channels (3a-c) of a communication system, such as SCCPCHs in a WCDMA communication system, are disclosed. The methods utilize bit-error rates of the signals estimated based on a received control sequence, such as a TFCI, or SIR differences between signals to determine which signals to softcombine, thereby facilitating to account for relatively rapid changes in the radio environment when determining which signals to softcombine.

A corresponding computer program product, computer readable medium, signal processing unit, radio receiver circuit, and electronic apparatus are also disclosed.

Fig. 1

## Description

## Technical Field

The present invention relates to a method and a processing unit for processing signals. More particularly, the present invention relates to a method and processing unit for processing signals representing the same data, received over a plurality of communication channels of a communication system, for soft combining the signals.

## Background

Various services are emerging for wireless mobile communication technologies. One example is multimedia broadcast multicast service (MBMS), which is a technology for broadcast of content over cellular networks to small terminals, or handsets, e.g. for mobile television (TV). MBMS services can e.g. be broadcasted over a secondary common control physical channel (SCCPCH) in a wideband code-division multiple access (WCDMA) communication system, wherein signals carrying the MBMS data may be broadcasted from one or more radio base stations to one or more mobile terminals, such as mobile telephones.

If there is more than one base station that is transmitting signals, representing the same MBMS data, to a mobile terminal, the mobile terminal can softcombine two or more of these signals for generating a combined signal. The purpose of softcombining signals, is that the combined signal should have a better quality, e.g. in terms of signal-to-interference ratio (SIR) and/or resulting bit-error rate (BER), than each of the signals individually. Aspects of softcombining of MBMS signals are described e.g. in GB 2 415 330 A and WO 2006/108703 A1.

One problem associated with softcombining is how to select which of the plurality of signals to soft combine. If the signals are selected incorrectly, the combined signal may have a worse quality than at least one of the individual signals.

## Summary

An object of the present invention is to provide means for selecting signals, to be softcombined, among a plurality of signals representing the same data.

According to a first aspect, there is provided a method of processing signals, representing the same data, each of which is received over a corresponding one of a plurality of communication channels of a communication system. Data is transmitted over each of the communication channels in transmission time intervals, each of which comprises at least one time slot. Data transmitted in such a time slot comprises a control sequence selected from a finite predefined set of control sequences. The method comprises:

a) for each of the signals:

- determining correlation values between soft data representing the control sequence of the signal in a time slot of the corresponding communication channel and each of the finite predetermined set of control sequences for determining the control sequence of the signal in the time slot; and
- estimating a bit-error rate of the signal based on the determined control sequence of the signal in the time slot and the soft data representing the control sequence of the signal in the time slot;

b) selecting the signal having the lowest estimated bit-error rate as a primary signal;
c) determining a secondary set of signals having an estimated bit-error rate which deviates from the estimated bit-error rate of the primary signal with less than a predetermined threshold value; and
d) softcombining the primary signal and the signals in the secondary set for generating a combined signal.

Each transmission time interval may comprises a plurality of frames, each comprising at least one time slot. The steps a) - d) may be repeated at least once every frame.

According to some embodiments, the steps a) - d) may be repeated every time slot.

Estimating the bit-error rate of a signal may comprise interpreting a soft data sample of the signal above a threshold value as a logic '1'. Furthermore, estimating the bit-error rate of the signal may comprise interpreting a soft data sample of the signal below the threshold value as a logic '0'.

Alternatively, estimating the bit-error rate of a signal may comprise interpreting a soft data sample of the signal above a first threshold value as a logic '1'. Furthermore, estimating the bit-error rate of the signal may comprise interpreting a soft data sample of the signal below a second threshold value, which is lower than the first threshold value, as a logic '0'. Moreover, estimating the bit-error rate of the signal may comprise discarding a soft data sample of the signal between the second and the first threshold value.

The communication system may be a wideband code-division multiple access (WCDMA) communication system. The communication channels may be secondary common control physical channels (SCCPCHs). The control sequence may be a transport format control indicator (TFCI), or a part thereof.

According to a second aspect, there is provided a method of processing signals, representing the same data, each of which is received over a corresponding one of a plurality of SCCPCHs in a WCDMA communication system. The method comprises:

A) for each of the signals:

- determining a signal-to-interference ratio (SIR) of a common pilot channel (CPICH) of a cell from which the signal is sent; and
- determining a spreading factor associated with the signal;

B) determining values representing SIR differences, in logarithmic scale, between signals, wherein such a value representing an SIR difference between a first and a second one of the signals is based on the SIR of the CPICH of the cell from which the first signal is sent, the spreading factor associated with the first signal, the SIR of the CPICH of the cell from which the second signal is sent, the spreading factor associated with the second signal, and a signaled power offset difference between the SCCPCH over which the first signal is received and the SCCPCH over which the second signal is received;

C) determining, based on said values representing the SIR differences, a primary signal having the highest SIR among the signals;

D) determining, based on said values representing the SIR differences, a secondary set of signals, wherein, for each of the signals in the secondary set, said values indicate that the SIR difference between the primary signal and said signal in the secondary set is less than a predetermined threshold value; and

E) softcombining the primary signal and the signals in the secondary set for generating a combined signal.

The steps A) - E) may be repeated at least once every frame. For example, the steps A) - E) may be repeated once every time slot.

The SIR difference between the first and the second signal may e.g. be given by

$$\Delta_{SIR} = \text{CPICH\_SIR}_I \cdot \text{SF}_I / 256 - \text{CPICH\_SIR}_{II} \cdot \text{SF}_{II} / 256 + \text{POD}$$

wherein $\Delta_{SIR}$ denotes the SIR difference, $\text{CPICH\_SIR}_I$ denotes the SIR of the CPICH of the cell from which the first signal is sent, $\text{SF}_I$ denotes the spreading factor associated with the first signal, $\text{CPICH\_SIR}_{II}$ denotes the SIR of the CPICH of the cell from which the second signal is sent, and $\text{SF}_{II}$ denotes the spreading factor of the second signal.

According to a third aspect, there is provided a computer program product comprising computer program code means for executing the method according to the first or the second aspect when said computer program code means are run by a programmable hardware unit.

According to a fourth aspect, there is provided a computer readable medium having stored thereon a computer program product comprising computer program code means for executing the method according to the first or the second aspect when said computer program code means are run by a programmable hardware unit.

According to a fifth aspect, there is provided a signal-processing unit for a radio receiver circuit, wherein the signal processing unit is adapted to perform the method according to the first or the second aspect.

According to a sixth aspect, there is provided a radio receiver circuit comprising a signal processing unit according to the fifth aspect.

According to a seventh aspect, there is provided an electronic apparatus comprising the radio receiver circuit according to the sixth aspect.

Further embodiments of the invention are defined in the dependent claims.

An advantage of embodiments of the present invention is that relatively fast changes in the radio environment can be accounted for when selecting which signals to softcombine.

It should be emphasized that the term "comprises/comprising" when used in this specification is taken to specify the presence of stated features, integers, steps, or components, but does not preclude the presence or addition of one or more other features, integers, steps, components, or groups thereof.

**Brief Description of the Drawings**

Further objects, features and advantages of embodiments of the invention will appear from the following detailed description, reference being made to the accompanying drawings, in which:

Fig. 1 schematically illustrates a plurality of base stations sending signals, representing the same data, to a mobile terminal;
Fig. 2 is a block diagram of a mobile terminal according to an embodiment of the present invention;
Fig. 3 is a block diagram of a radio receiver circuit according to an embodiment of the present invention;
Fig. 4 schematically illustrates transmission timing for a secondary common control physical channel (SCCPCH) in a wideband code-division multiple access (WCDMA) communication system;
Figs. 5-8 are flowcharts for methods according to embodiments of the present invention; and
Fig. 9 schematically illustrates a computer readable medium and a programmable hardware unit.

**Detailed Description**

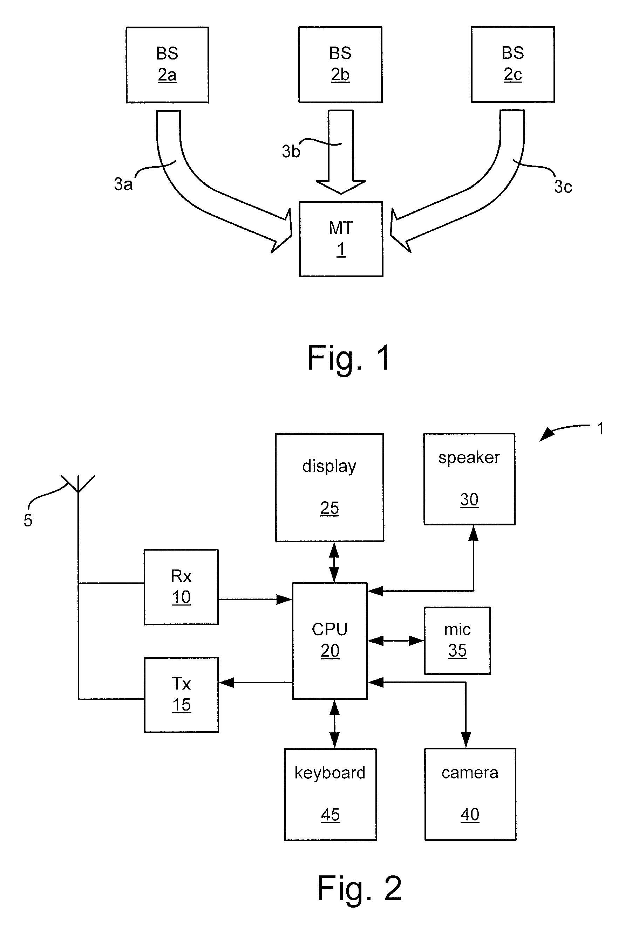

Fig. 1 schematically illustrates an environment in which embodiments of the present invention may be utilized. A mobile terminal (MT) 1 is arranged, in a communication system, to receive signals from a plurality of base stations (BSs) 2a-c over a plurality of communication channels 3a-c. Each of the signals represents the same data. An example, which is used for illustration of embodiments of the present invention, is broadcasting of multimedia broadcast multicast service (MBMS) data in a wideband code-division multiple access (WCDMA) communication system, wherein the communication channels 3a-c are secondary common control physical channels (SCCPCHs). In such a scenario, the same MBMS data, such as mobile TV, may be broadcasted from each of the plurality of BSs 2a-c, e.g. in order to improve the reliability and/or geographical coverage of the transmission compared with if only one BS was used.

Softcombining a number of signals $x_1[n]$, $x_2[n]$, ... , $x_M[n]$ can be accomplished by generating a sum of the signals for generating a combined signal $x[n]$, i.e.

$$x[n] = \sum_{i=1}^{M} x_i[n] \qquad \text{(Eq. 1)}$$

where $i$ is an index identifying the signal and $n$ is a sequence index. Each of $x_1[n]$, $x_2[n]$, ... , $x_M[n]$ and $x[n]$ are signals represented with soft bits. Furthermore, the combined signal may, in some embodiments, be clipped such that, for those $n$ for which the sum in Eq. 1 exceeds a value, which is the strongest representation of logic '1', $x(n)$ is set to said value, which is the strongest representation of logic '1', and for those $n$ for which the sum in Eq. 1 falls below a value, which is the strongest representation of logic '0', $x(n)$ is set to said value, which is the strongest representation of logic '0'. For example, in some embodiments, the soft bits may adopt integer values between and including -7 and 7, where -7 is the strongest representation of logic '0' and 7 is the strongest representation of logic 1. In that case, for those $n$ for which the sum in Eq. 1 exceeds 7, $x(n)$ is set to 7. Furthermore, for those $n$ for which the sum in Eq. 1 falls below -7, $x(n)$ is set to -7.

Embodiments of the present invention have been developed based on an insight that existing methods for selecting which signals to softcombine, e.g. in the context of multimedia broadcast multicast service (MBMS) signals received in a wideband code-division multiple access (WCDMA) communication system, may sometimes fail to accurately account for relatively rapid changes in the radio environment, such as due to fading and/or a changing interference situation. This is elucidated with a reference example in the following. According to the reference example (concerning MBMS signals transmitted over an SCCPCH in WCDMA), a solution is considered where the quality of a channel is estimated with a calculated Ec/No value of the common pilot channel (CPICH) of the cell that the SCCPCH channel is despread from, as well as a configured power offset difference (POD) value.

The absolute Ec/No in dBm for any of the SCCPCH channels cannot be calculated. However the Ec/No power offset between the SCCPCH from a $Cell_A$ and the SCCPCH from a $Cell_B$ (secondary power offset, $SPO_B$) can be calculated.

The $SPO_B$ between the SCCPCH from $Cell_A$ and the SCCPCH from Cells is calculated from the CPICH Ec/No for CellA ($EcNo^{CPICH_A}$) and the CPICH Ec/No for CellB ($EcNo^{CPICH_B}$) as well as the parameter secondary CCPCH power offset difference ($POD_B$), which is a parameter that is received from the network. The $SPO_B$ is given by

$$SPO_B = EcNo^{CPICH_B} - EcNo^{CPICH_A} + 2POD_B \quad (\tfrac{1}{2}\text{dB})$$

The $POD_B$ parameter is signaled by the network and specifies, in dB, the difference between the CPICH-SCCPCH Ec/No power offset (PO) between $Cell_A$ and $Cell_B$ as $PO^{CellB}-PO^{CellA}$.

According to the reference example, the SPO values are used to decide which channels to soft combine; any channel that has too large power offset compared to the strongest channel is excluded. A drawback that has been identified with the solution of the reference example is that the decision regarding which cells to soft combine cannot be taken more frequently than the measurement interval for the received signal code power (RSCP) and the received signal strength indication (RSSI), on which the determination of the Ec/No is based. This gives relatively slow adaptation to the radio environment, for example when a received signal has been subject to fading. Because the SCCPCH has a lower spreading factor than the CPICH, fading may affect and degrade the SCCPCH more than the CPICH. Furthermore, momentary errors will not be detected and a SCCPCH with short time poor quality may degrade the quality of the combined signal.

Fig. 2 is a block diagram of an MT 1 according to an embodiment of the present invention. According to the embodiment, the MT 1 has an antenna 5 for transmitting and receiving radio signals. The antenna 5 is only an example. In other embodiments, the MT 1 may have a plurality of antennas. Furthermore, the MT 1 comprises a radio receiver circuit 10 for receiving data and a radio transmitter circuit 15 for transmitting data. Moreover, the MT 1 comprises a central processing unit (CPU) 20 for overall control of the MT 1. The CPU 2 is operatively connected to the radio receiver circuit 10 and the radio transmitter circuit 20. Furthermore, the MT 1 comprises a number of output units, such as a display 25 and a speaker 30, and a number of input units, such as a microphone 35, a camera 40, and a keyboard 45, for interaction with a user. It should be emphasized that the block diagram in Fig. 2 is only an example. For example, some units in Fig. 2 may be omitted in some embodiments and/or additional units may be included. Furthermore, although the units in Fig. 2 have been illustrated as separate units, some units, or parts thereof may be implemented as combined units. For example, the keyboard 45 may be implemented in combination with the display 25 as a touch screen. Furthermore, parts of the radio receiver circuit 10 and/or the radio transmitter circuit 20, may be implemented in the CPU 20.

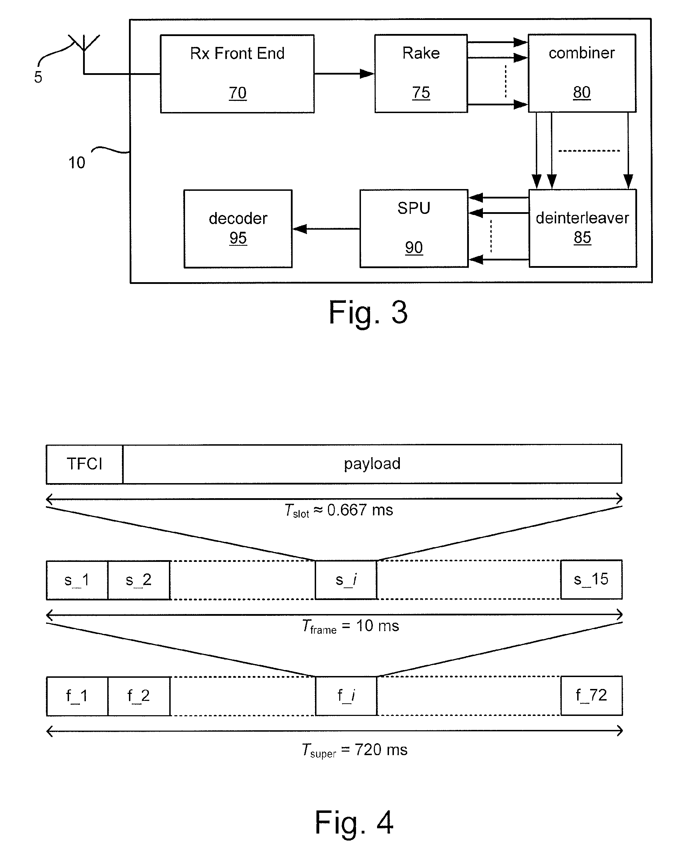

Fig. 3 is a block diagram of the radio receiver circuit 10 according to an embodiment of the present invention. According to the embodiment, the radio receiver circuit 10 comprises receiver front end unit 70, which is arranged to downconvert radiofrequency (RF) signals received e.g. from the BSs 2a-c (Fig. 1). For this purpose, the receiver front end 70 may comprise one or more mixers (not shown), local oscillators (not shown), filters (not shown), etc, as is known in the art and therefore not further described in this specification. Furthermore, as illustrated in Fig. 3, the radio receiver circuit 10 may comprise a rake receiver unit 75, a combiner unit 80, a deinterleaver unit 85, and a decoder unit 95 for equalization, demodulation, and decoding of the received signals. Such units are known in the field of WCDMA receivers, and are therefore not further described in this specification. Multiple arrows at the outputs of blocks 75, 80, and 85 indicate that the signals received from the plurality of base stations 2a-c are processed separately in these blocks. Furthermore, according to the embodiment illustrated in Fig. 3, the radio receiver circuit 10 comprises a signal processing unit (SPU) 90. The SPU 90 is arranged to perform softcombining of the signals, in order to generate one combined signal (as indicated by the single arrow at the output of the SPU 90 in Fig. 3), that has a higher quality, e.g. in terms of signal-to-interference ratio (SIR) and/or bit-error rate (BER) than the individual signals.

Fig. 4 schematically illustrates transmission timing for a SCCPCH in a WCDMA communication system, when the SCCPCH is used for transmission of MBMS data. A so called super frame has a duration of $T_{super} = 720$ ms. Each superframe is in turn divided into 72 frames f_1-f_72, each of which has a duration of $T_{frame} = 10$ ms. Furthermore, each frame f_$i$ is in turn divided into 15 time slots s_1-s_15, each of which has a duration of $T_{slot} \approx 0.667$ ms. A number of neighboring frames are grouped together into so called transmission-time intervals (TTIs). In the case of MBMS, the number of frames in a TTI is typically four or eight for the MBMS traffic channel (MTCH), which is mapped onto the SCCPCH. However, other numbers of frames may apply for other services transmitted over the SCCPCH, and the number of frames in a TTI, as specified by a standard specification, may change over time. A more general view, which is not limited to SCCPCH, is that a TTI comprises at least one time slot, as outlined above with reference to Fig. 1. As illustrated in Fig. 4 for the time slot s_$i$, a TFCI is transmitted in the beginning of each time slot s_1-s_15. The TFCI is a bit sequence which identifies for the radio receiver circuit how the received signal in the time slot is to be deinterleaved and decoded for recovering the data. The TFCI is selected from a finite predefined set of possible TFCIs. As indicated in Fig. 3, payload data is also transmitted in the slot s_$i$ after the TFCI.

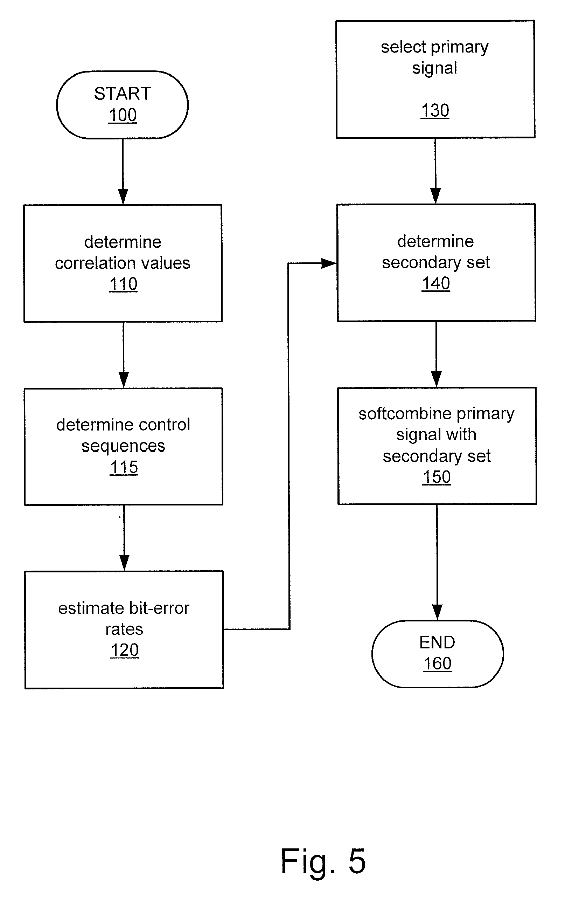

Fig. 5 is a flowchart of a method of processing signals according to an embodiment of the present invention. The method may e.g. be performed by the SPU 90 in the embodiment of the radio receiver circuit 10 illustrated in Fig. 3. The signals represent the same data and are received over the plurality of communication channels 3a-c (Fig. 1). Data is transmitted over each of the communication channels 3a-c in TTIs. The communication channels may e.g. be SCCPCHs of a WCDMA system, the signals may represent MBMS data, and the TTIs may be the TTIs described in that context above. However, in a more general sense, which is not limited to that particular scenario, each of the TTIs may be defined as comprising at least one time slot.

Moreover, data transmitted in a time slot comprises a control sequence selected from a finite predefined set of control sequences, such as the TFCI described above. A TFCI (or other similar control sequence in another scenario) received by the radio receiver circuit 10 may be represented in the radio receiver circuit 10 with soft data, i.e. a sequence of soft bits, which can adopt not only values representing logic '0' and logic '1', but also values in between. The received TFCI of each slot corresponds to one of the TFCIs of the predefined set, which one can be determined by means of determining correlation values between the received TFCI and the TFCIs in the predefined set. The correlation value corresponding to the correct TFCI is normally significantly higher than the other correlation values, whereby the correct TFCI can be determined. The correlation value between the received TFCI and a TFCI in the predefined set may be determined according to

$$C_i = \sum_n R[n] TFCI_i[n] \qquad \text{(Eq. 2)}$$

where $TFCI_i[n]$ is the TFCI in the predetermined set, $i$ is an index indentifying the particular TFCI in the predetermined set, $R[n]$ is the received TFCI, $n$ is a sequence index, and $C_i$ is the resulting correlation value. The summation is performed over all samples of the received TFCI. Such correlation values may be defined in a similar manner for other types of control sequences, belonging to a finite predefined set of possible control sequences, which may be used in other scenarios.

According to the flowchart in Fig. 5, the operation is started in step 100. For each of the received signals, correlation values between soft data representing the control sequence of the signal in a time slot of the corresponding communication channel and each of the finite predetermined set of control sequences are determined in step 110. In step 115, the control sequence of each signal in the time slot is determined based on the correlation values, as outlined above.

Once it is determined, based on the correlations mentioned above, which control sequence has been received in a time slot, it is possible to estimate a BER of the signal based on the determined control sequence and the soft data representing the control sequence. For example, the soft data representing the control sequence may be converted into "hard data", i.e. a sequence of hard bits (or simply bits), which may only adopt values representing a logic '0' or a logic '1'.

For example, a soft data sample above a threshold value may be interpreted as a logic '1', and a soft data sample below the threshold value may be interpreted as a logic '0'. The interpretation of a soft data sample which is equal to the threshold value may be different from embodiment to embodiment. Alternatively, the threshold value may be chosen between two adjacent possible values for the soft data samples, such that a soft data sample will never be equal to the threshold value.

In an alternative embodiment, a soft data sample above a first threshold value may be interpreted as a logic '1'. Furthermore, a soft data sample below a second threshold value, which is lower than the first threshold value, may be interpreted as a logic '0'. Moreover, a soft data sample of the signal between the second and the first threshold value may be interpreted as an unreliable bit, which is discarded for the purpose of estimating the BER.

The BER can be estimated by comparing the bits, which have been interpreted from the soft data representing the received control sequence, with the actual (known) bits of the control sequence, which have been determined based on the correlation values in step 115. The estimate BER may e.g. be defined as the quotient between the number of samples of the comparison for which the interpreted bit differs from the actual bit and the total number of samples of the comparison.

For each of the signals, the BER of the signal is estimated based on the determined control sequence of the signal in the time slot and the soft data representing the control sequence of the signal in the time slot in step 120, e.g. as outlined above. In some embodiments, the BER of the signal may be estimated based on the determined control sequences of the signal and the soft data representing the determined control sequences of the signal during more than one time slot. For example, for some types of data traffic transmitted over a SCCPCH in a WCDMA communication system, the TFCI is to long to fit in the TFCI portion of a single time slot, and is therefore distributed over the TFCI portions of a plurality of consecutive time slots. In other words, the TFCI is divided into several shorter control sequence, each of which is transmitted in the TFCI portion of one of said consecutive time slots. In such a case, the BER estimation may be based on the control sequences of all of these consecutive time slots (i.e. be based on the whole TFCI).

The estimated BERs of the signals can be used as quality metrics for the signals; the lower the estimated BER is, the higher the quality is. Which signals to softcombine may therefore be determined based on the estimated BERs. Whether or not a combined signal, generated by softcombining two signals, has a higher quality (such as a smaller BER or higher SIR) than both of the two signals individually normally depends on the quality difference between the two signals. If the quality difference is within a certain limit, the quality of the combined signal is higher than the quality of each of the two signals individually. On the other hand, if the quality difference is outside said certain limit, the quality of the combined signal is lower than that of the one of the two signals that has the highest quality. In the latter case, nothing is gained by softcombining the two signals, and it is better to use the one of the two signals that has the highest quality instead of the combined signal.

In step 130, the one of the signals having the lowest estimated BER is selected as a primary signal. Furthermore, in step 140, a secondary set of signals, selected from the remaining signals, is determined. The signals in the secondary set each has an estimated BER which deviates from the estimated BER of the primary signal with less than a predetermined threshold value. A suitable threshold value may e.g. be determined based on simulations and/or measurements, such that the combined signal has a higher quality than the individual signals that are subject to softcombining. Furthermore, the threshold value may be dynamically adapted, e.g. based on the radio conditions. For example, the threshold value may be a function of the BER of the primary signal.

The primary signal and the signals in the secondary set is softcombined in step 150 for generating a combined signal. The operation of the method is ended in step 160.

An advantage of embodiments of the method described above with reference to Fig. 5 is that, since the control sequence (such as TFCI in the case of MBMS signals transmitted over a SCCPCH in WCDMA) is present in every time slot, it is possible to update the estimated BER values relatively often. Thereby, it is possible to relatively rapidly adapt which signals are to be softcombined, and thus account for relatively rapid changes in the radio environment, e.g. due to fading and/or interference from other radio signals. According to some embodiments, the method illustrated by the flow chart is in Fig. 5 is repeated every time slot. According to some embodiments, wherein each TTI comprises a plurality of frames, each comprising at least one time slot (such as illustrated for the SCCPCH in WCDMA in Fig. 4), the method illustrated by the flow chart is in Fig. 5 is repeated at least once every frame.

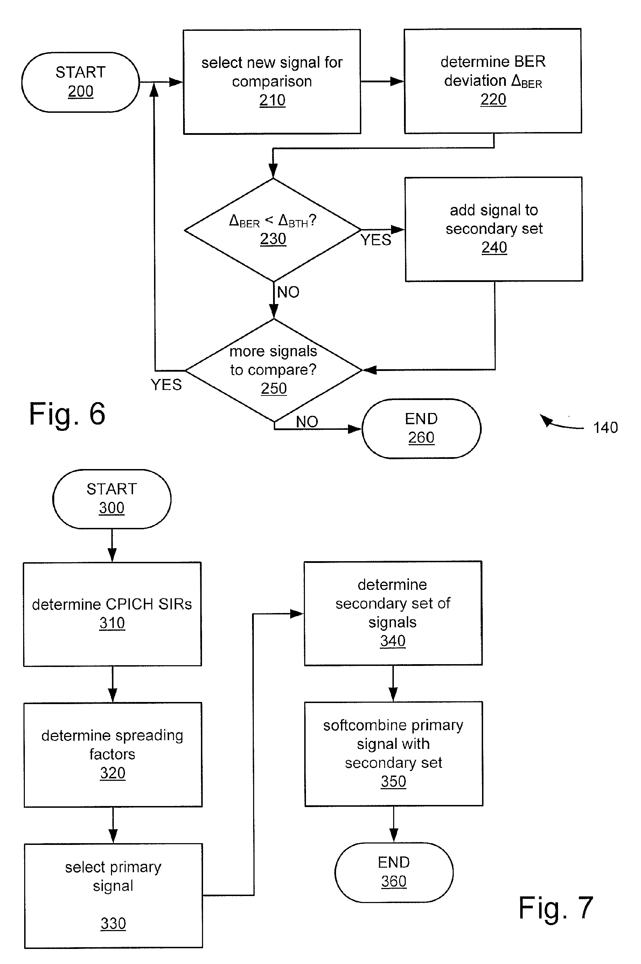

Fig. 6 is a flowchart for step 140 (Fig. 5) according to an embodiment. Before step 140 is executed, the secondary set is empty. According to the embodiment, the operation of step 140 is started in step 200. In step 210, a new signal is selected for comparison with the primary signal. In step 220, the BER difference $\Delta_{BER}$ between the primary signal and the signal selected for comparison is determined. In step 230, $\Delta_{BER}$ is compared with the threshold value $\Delta_{BTH}$. If $\Delta_{BER} < \Delta_{BTH}$, the signal selected for comparison is added to the secondary set in step 240, after which the operation proceeds to step 250. Otherwise, the operation proceeds directly to step 250. In step 250, it is checked whether there are any more signals to compare. If not, the operation proceeds to step 260, where step 140 is ended. Otherwise, the operation returns to step 210.

According to other embodiments of the present invention, wherein the plurality of communication channels 3a-c (Fig. 1) are SCCPCHs of a WCDMA communication system, there is provided a method in which SIR values for the corresponding CPICHs, the spreading factors of the SCCPCHs, and power offset differences (PODs) between the SCCPCHs over which the signals are sent are utilized to estimate the quality differences between the signals in order to select which signals to softcombine. The SIR of the CPICH is normally continuously monitored or measured in the MT 1. Hence, and advantage of this approach, similarly to the embodiments where the BER estimated from the control sequences transmitted in each time slot are utilized for the selection, is that it is possible to relatively rapidly adapt which signals are to be softcombined, and thus account for relatively rapid changes in the radio environment, e.g. due to fading and/or interference from other radio signals. The performance, in terms of being able to account for relatively rapid changes in the radio environment is comparable to that of the method utilizing BERs estimated from TFCIs transmitted in each time slot over the SCCPCHs.

Although the absolute SIR values of each SCCPCH cannot be determined from the parameters listed above, it is possible to determine an SIR difference $\Delta_{SIR}$ between an SCCPCH over which a first signal is sent and an SCCPCH over which a second signal is sent according to:

$$\Delta_{SIR} = CPICH\_SIR_I \cdot \frac{SF_I}{256} - CPICH\_SIR_{II} \cdot \frac{SF_{II}}{256} + POD \qquad (\text{Eq. 3})$$

In Eq. 3, CPICH_SIR$_I$ denotes the SIR of the CPICH of the cell from which the first signal is sent, SF$_I$ denotes the spreading factor associated with the first signal, CPICH_SIR$_{II}$ denotes the SIR of the CPICH of the cell from which the second signal is sent and SF$_{II}$ denotes the spreading factor of the second signal. POD denotes the signaled power offset difference between the SCCPCHs over which the first and the second signals are sent. The $\Delta_{SIR}$ given by the equation above is given in dB scale (i.e. a logarithmic scale). The denominator 256 that appears in the equation above is the spreading factor of the CPICH.

Fig. 7 is a flowchart for an embodiment of the method. The method may e.g. be performed by the SPU 90 in the embodiment of the radio receiver circuit 10 illustrated in Fig. 3.

According to the flowchart in Fig. 7, the operation is started in step 300. For each of the received signals, the SIR of the CPICH of the cell from which the signal is sent is determined in step 310. Furthermore, for each of the signals, a spreading factor associated with the signal, i.e. the spreading factor of the SCCPCH over which the signal is transmitted, is determined in step 320.

The method includes determining values representing SIR differences, in logarithmic scale, between signals. Such a value representing an SIR difference between a first and a second one of the signals is based on the SIR of the CPICH of the cell from which the first signal is sent, the spreading factor associated with the first signal, the SIR of the CPICH of the cell from which the second signal is sent, the spreading factor associated with the second signal, and the signaled POD between the SCCPCH over which the first signal is received and the SCCPCH over which the second signal is received. The value may e.g. be determined by Eq. 3 above. The determined values are utilized in step 330-340 described below. The determination of the values is not illustrated with a separate step in the flowchart of Fig. 7. At least part of the determination of the values may be performed as a part of step 330. Additionally, part of the determination of the values may be performed as a part of step 340.

In step 330, a primary signal is determined based on the values representing the SIR differences. The primary signal has the highest SIR among the signals.

Furthermore, in step 340, a secondary set of signals is determined based on the values representing the SIR differences. For each of the signals in the secondary set, said values representing the SIR differences indicate that the SIR difference between the primary signal and said signal in the secondary set is less than a predetermined threshold value. A suitable threshold value may e.g. be determined based on simulations and/or measurements, such that the combined signal has a higher quality than the individual signals that are subject to softcombining.

In step 350, the primary signal and the signals in the secondary set are softcombined for generating a combined signal. The operation is ended in step 360.

Similarly to the method illustrated in Fig. 5, the method illustrated in Fig. 7 is repeated once every time slot according to some embodiments. Furthermore, again similarly to the method illustrated in Fig. 5, the method illustrated in Fig. 7 is repeated at least once every frame according to some embodiments.

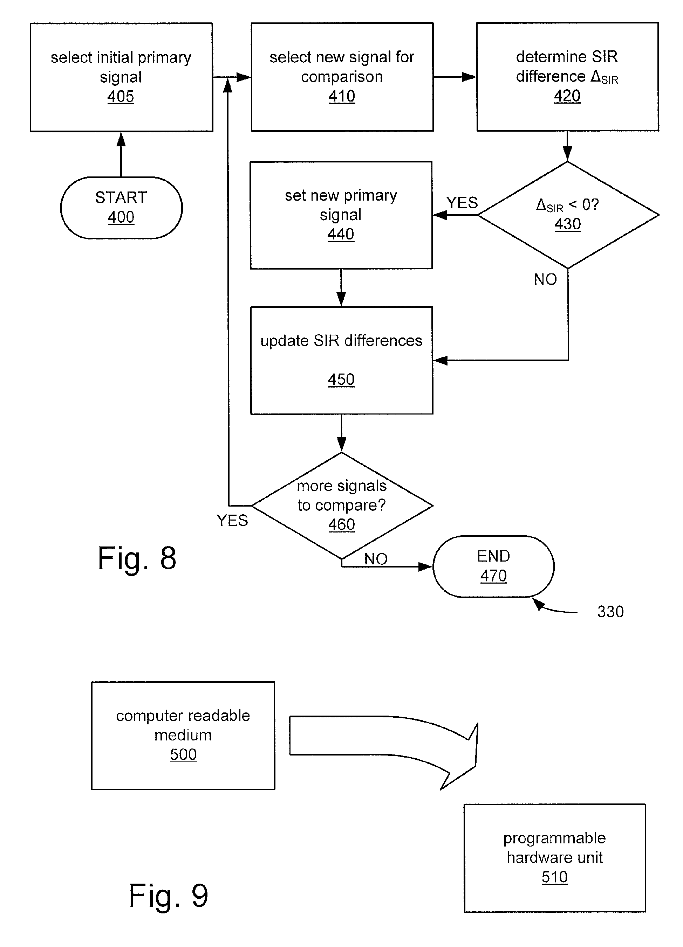

Fig. 8 is a flowchart of step 330 according to an embodiment. According to this embodiment, the values representing the SIR differences between signals are determined in step 330. The operation of step 330 is started in step 400. In step 405, an initial primary signal is selected. Furthermore, in step 410, a new signal is selected for comparison with the current primary signal. In step 420, the SIR difference $\Delta_{SIR}$ between the current primary signal and the signal selected for comparison is determined, e.g. based on Eq. 3. In step 430 it is checked whether the determined $\Delta_{SIR}$ is less than 0 (or, in alternative embodiments, less than or equal to 0). If the answer in step 440 is yes, the signal selected for comparison has a better SIR (or in the alternative embodiments, equal or better) than the current primary signal. Therefore, the signal selected for comparison replaces the current primary signal as the primary signal in step 440, after which the operation proceeds to step 450. If the answer in step 430 is no, the operation proceeds directly to step 450.

A record is kept over SIR differences between the current primary signal and the other signals that have been subject to comparison. In step 450, this record is updated. If a new primary signal has been set in step 440, the previous entries in the record is updated based on the $\Delta_{SIR}$ determined in step 420 and the previous entries, such that these entries reflect the SIR differences between the new primary signal and the signals that have been subject to comparison so far, and $-\Delta_{SIR}$ is entered as a new entry indicating the SIR difference between the new primary signal and the previous primary signal. If, on the other hand, the answer in step 430 was no, the record is updated in step 450 by inserting $\Delta_{SIR}$ as a new entry indicating the SIR difference between the current primary signal and the signal selected for comparison in step 410.

In step 460, it is checked whether there are any more signals to compare. If the answer in step 460 is yes, the operation returns to step 410. If the answer in step 460 is no, the operation of step 330 is ended in step 470.

When step 330 has been completed in accordance with the embodiment illustrated in Fig. 8, the current primary signal is the correct primary signal, i.e. the one of the signals having the highest SIR. Furthermore, there is a record of values representing the SIR differences between the primary signal and the other signals. This record can be used in step 340 in order to determine the secondary set of signals. In alternative embodiments, no record is kept of the SIR differences in step 330. Instead, the values representing the SIR differences between the primary signal and the other signals are determined in step 340 for determining the secondary set of signals.

According to embodiments of the present invention, the SPU 90 (Fig. 90) may be adapted to perform any of the embodiments of the methods described above.

The SPU 90 (Fig. 3) may be implemented as an application-specific hardware unit, such as an application-specific integrated circuit (ASIC). Alternatively, the SPU 90, or parts thereof, may be implemented using one or more configurable or programmable hardware units, such as but not limited to one or more field-programmable gate arrays (FPGAs), processors, or microcontrollers. For example, the functionality of the SPU 90 may be implemented in the CPU 20 (Fig. 2). Hence, embodiments of the present invention may be embedded in a computer program product, which enables implementation of the method and functions described herein, e.g. the embodiments of the methods described above with reference to Figs. 5-8. Therefore, according to embodiments of the present invention, there is provided a computer program product, comprising instructions arranged to cause a programmable hardware unit with processing capabilities, such as the aforementioned one or more processors or micro controllers, to perform the steps of any of the embodiments of the methods described above with reference to Figs. 5-8. The computer program product may comprise program code which is stored on a computer readable medium 500, as illustrated in Fig. 9, which can be loaded and executed by a programmable hardware unit 410 having processing capabilities, to cause it to perform the steps of any of the embodiments of the methods described above with reference to Figs. 5-8.

According to embodiments of the present invention, the radio receiver circuit 10 is comprised in an electronic apparatus, such as the MT 1 (Fig. 2). Such an electronic apparatus may e.g. be, but is not limited to, a mobile telephone, a smartphone, a portable digital assistant, a computer, or a data modem, such as a PC card data modem.

The present invention has been described above with reference to specific embodiments. However, other embodiments than the above described are possible within the scope of the invention. Different method steps than those described above, performing the method by hardware or software, may be provided within the scope of the invention. The different features and steps of the embodiments may be combined in other combinations than those described. The scope of the invention is only limited by the appended patent claims.

**Claims**

1. A method of processing signals, representing the same data, each of which is received over a corresponding one of a plurality of communication channels of a communication system, wherein data is transmitted over each of the communication channels (3a-c) in transmission time intervals, each of which comprises at least one time slot (s_1-s_15), wherein data transmitted in a time slot (s_$i$) comprises a control sequence (TFCI) selected from a finite predefined set of control sequences, comprising:

    a) for each of the signals:

        - determining correlation values between soft data representing the control sequence (TFCI) of the signal in a time slot (s_$i$) of the corresponding communication channel (3a-c) and each of the finite predetermined set of control sequences for determining the control sequence (TFCI) of the signal in the time slot; and
        - estimating a bit-error rate of the signal based on the determined control sequence (TFCI) of the signal in the time slot and the soft data representing the control sequence of the signal in the time slot;

    b) selecting the signal having the lowest estimated bit-error rate as a primary signal;
    c) determining a secondary set of signals having an estimated bit-error rate which deviates from the estimated bit-error rate of the primary signal with less than a predetermined threshold value; and
    d) softcombining the primary signal and the signals in the secondary set for generating a combined signal.

2. The method according to claim 1, wherein each transmission time interval comprises a plurality of frames (f_1-f_72), each comprising at least one time slot, and the steps a) - d) are repeated at least once every frame (f_1 - f_72).

3. The method according to claim 1 or 2, wherein the steps a) - d) are repeated every time slot (s_1 - s_15).

4. The method according to any preceding claim, wherein estimating the bit-error rate of a signal comprises interpreting a soft data sample of the signal above a threshold value as a logic '1'; and interpreting a soft data sample of the signal below the threshold value as a logic '0'.

5. The method according to any of the claims 1-3, wherein estimating the bit-error rate of a signal comprises interpreting a soft data sample of the signal above a first threshold value as a logic '1'; interpreting a soft data sample of the signal below a second threshold value, which is lower than the first threshold value, as a logic '0'; and discarding a soft data sample of the signal between the second and the first threshold value.

6. The method according to any of the claims 1-5, wherein the communication system is a wideband code-division multiple access, WCDMA, communication system, the communication channels (3a-c) are secondary common control physical channels, SCCPCH, and the control sequence (TFCI) is a transport format control indicator, TFCI, or a part thereof.

7. A method of processing signals, representing the same data, each of which is received over a corresponding one of a plurality of secondary common control physical channels, SCCPCHs, (3a-c) in a wideband code-division multiple access, WCDMA, communication system, comprising:

A) for each of the signals:

- determining a signal-to-interference ratio, SIR, of a common pilot channel, CPICH, of a cell from which the signal is sent; and
- determining a spreading factor associated with the signal;

B) determining values representing SIR differences, in logarithmic scale, between signals, wherein such a value representing an SIR difference between a first and a second one of the signals is based on the SIR of the CPICH of the cell from which the first signal is sent, the spreading factor associated with the first signal, the SIR of the CPICH of the cell from which the second signal is sent, the spreading factor associated with the second signal, and a signaled power offset difference between the SCCPCH over which the first signal is received and the SCCPCH over which the second signal is received;

C) determining, based on said values representing the SIR differences, a primary signal having the highest SIR among the signals;

D) determining, based on said values representing the SIR differences, a secondary set of signals, wherein, for each of the signals in the secondary set, said values indicate that the SIR difference between the primary signal and said signal in the secondary set is less than a predetermined threshold value; and

E) softcombining the primary signal and the signals in the secondary set for generating a combined signal.

8. The method according to claim 7, wherein the steps A) - E) are repeated at least once every frame (f_1 - f_72).

9. The method according to claim 8, wherein the steps A) - E) are repeated once every time slot (s_1 - s_15).

10. The method according to any of the claims 7-9, wherein the SIR difference between the first and the second signal is given by

$$\Delta_{SIR} = CPICH\_SIR_I \cdot SF_I/256 - CPICH\_SIR_{II} \cdot SF_{II}/256 + POD$$

wherein

- $\Delta_{SIR}$ denotes the SIR difference;
- $CPICH\_SIR_I$ denotes the SIR of the CPICH of the cell from which the first signal is sent;
- $SF_I$ denotes the spreading factor associated with the first signal;
- $CPICH\_SIR_{II}$ denotes the SIR of the CPICH of the cell from which the second signal is sent; and
- $SF_{II}$ denotes the spreading factor of the second signal.

11. A computer program product comprising computer program code means for executing the method according to any preceding claim when said computer program code means are run by a programmable hardware unit (510).

12. A computer readable medium (500) having stored thereon a computer program product comprising computer program code means for executing the method according to any of the claims 1 - 10 when said computer program code means are run by a programmable hardware unit (510).

13. A signal-processing unit (90) for a radio receiver circuit (10), wherein the signal processing unit (90) is adapted to perform the method according to any of the claims 1 - 10.

14. A radio receiver circuit (10) comprising a signal processing unit (90) according to claim 13.

15. An electronic apparatus (1) comprising the radio receiver circuit (10) according to claim 14.

Fig. 1

Fig. 2

Fig. 3

Fig. 4

START
100

determine
correlation values
110

determine control
sequences
115

estimate bit-error
rates
120

select primary
signal
130

determine
secondary set
140

softcombine primary
signal with
secondary set
150

END
160

Fig. 5

START
200

select new signal for comparison
210

determine BER deviation $\Delta_{BER}$
220

$\Delta_{BER} < \Delta_{BTH}$?
230

YES

add signal to secondary set
240

NO

more signals to compare?
250

YES

NO

END
260

Fig. 6

140

START
300

determine CPICH SIRs
310

determine spreading factors
320

select primary signal
330

determine secondary set of signals
340

softcombine primary signal with secondary set
350

END
360

Fig. 7

select initial primary
signal
405

select new signal for
comparison
410

determine SIR
difference $\Delta_{SIR}$
420

START
400

set new primary
signal
440

YES

$\Delta_{SIR} < 0?$
430

NO

update SIR differences

450

more signals
to compare?
460

YES

NO

END
470

330

**Fig. 8**

computer readable
medium
500

programmable
hardware unit
510

**Fig. 9**

Europäisches
Patentamt
European
Patent Office
Office européen
des brevets

**EUROPEAN SEARCH REPORT**

Application Number

EP 09 16 0631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | AHO K ET AL: "Performance Enhancement of Multimedia Broadcast Multicast Service (MBMS) with Receive Diversity" NETWORKING, 2007. ICN '07. SIXTH INTERNATIONAL CONFERENCE ON, IEEE, PI, 22 April 2007 (2007-04-22), page 86, XP031214537 ISBN: 9780769528052 | 1,11-15 | INV. H04B1/707 H04B7/02 H04W36/18 |
| Y | * sections I, II.A.2, II.C, II.D, III, IV, V * | 2-10 | |
| Y | CHRISTOPH A JOTTEN ET AL: "Performance Evaluation of Multicast/Broadcast Single Frequency Network Operation for WCDMA" SPREAD SPECTRUM TECHNIQUES AND APPLICATIONS, 2008. ISSSTA '08. IEEE 10TH INTERNATIONAL SYMPOSIUM ON, IEEE, PISCATAWAY, NJ, USA, 25 August 2008 (2008-08-25), pages 79-84, XP031318987 ISBN: 9781424422036 * sections I, II, III, IV, V.B * | 2-10 | |
| A | WO 2006/137592 A1 (NIPPON ELECTRIC CO [JP]; WANG XINHUA [AU]; BUI THANH NGOC [AU]; VASIC) 28 December 2006 (2006-12-28) * abstract * * page 2, line 8 - page 3, line 24 * * page 4, line 15 - page 7, line 27 * | 1-15 | TECHNICAL FIELDS SEARCHED (IPC) H04B H04W |

-/--

The present search report has been drawn up for all claims

| Place of search | Date of completion of the search | Examiner |
|---|---|---|
| The Hague | 16 October 2009 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**Europäisches Patentamt**
**European Patent Office**
**Office européen des brevets**

# EUROPEAN SEARCH REPORT

Application Number

EP 09 16 0631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JANNE KURJENNIEMI ET AL: "System Level Analysis of Dynamic Receiver Reconfiguration for MBMS on S-CCPCH" IEEE INTERNATIONAL SYMPOSIUM ON PERSONAL, INDOOR AND MOBILE RADIO COMMUNICATIONS. PIMRC, IEEE; PI, XX, 1 September 2007 (2007-09-01), pages 1-5, XP031168854 ISBN: 9781424411436 * sections I, II, III.B, III.C, III.D, V.A, VI * | 1-15 | |
| A | US 2006/146745 A1 (CAI ZHIJUN [US] ET AL) 6 July 2006 (2006-07-06) * paragraph [0017] - paragraph [0018] * * paragraph [0033] - paragraph [0038]; figures 2, 3 * * paragraph [0056] - paragraph [0063] * * paragraph [0067] - paragraph [0071] * | 1-15 | |

TECHNICAL FIELDS
SEARCHED (IPC)

The present search report has been drawn up for all claims

| Place of search | Date of completion of the search | Examiner |
|---|---|---|
| The Hague | 16 October 2009 | Nilsson, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                    EP 09 16 0631

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2009

| Patent document cited in search report | | Publication date | Patent family member(s) | | Publication date |
|---|---|---|---|---|---|
| WO 2006137592 | A1 | 28-12-2006 | AU | 2006202144 A1 | 11-01-2007 |
| | | | EP | 1894318 A1 | 05-03-2008 |
| | | | JP | 2008547243 T | 25-12-2008 |
| | | | US | 2009088190 A1 | 02-04-2009 |
| US 2006146745 | A1 | 06-07-2006 | EP | 1836787 A2 | 26-09-2007 |
| | | | JP | 2007525914 T | 06-09-2007 |
| | | | US | 2008205322 A1 | 28-08-2008 |
| | | | WO | 2006074355 A2 | 13-07-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2415330 A

- WO 2006108703 A1